# EUROPEAN PATENT APPLICATION

(11) **EP 4 269 149 A1**
(43) Date of publication of application: **01.11.2023**
(21) Application number: 21910274.6
(22) Date of filing: 07.12.2021
(51) Int. Cl.: B60K 11/04, B60K 11/08, E02F 9/00

(54) **CONSTRUCTION MACHINE**

(30) Priority: 22.12.2020 JP 2020212335
(71) Applicant: Yanmar Holdings Co., Ltd., Osaka-shi, Osaka, 530-0013 (JP)
(72) Inventor: TANIGAWA Yukihiro, Chikugo-shi, Fukuoka 833-0055 (JP)
(74) Representative: Dennemeyer & Associates S.A.
(86) International application number: PCT/JP2021/044833
(87) International publication number: WO 2022/138125

(57) **Abstract**

A construction machine (100) comprises an engine (302), a cooling fan (304), a hood (121), a heat exchanger (306), and a partition plate (308a). The cooling fan (304) is assembled to the engine (302). The hood (121) includes an exhaust opening (200). The heat exchanger (306) is arranged between the cooling fan (304) and the exhaust opening (200). The partition plate (308a) forms an air discharge air passage (307) between the heat exchanger (306) and the exhaust opening (200). The partition plate (308a) is inclined upward in a direction from the heat exchanger (306) to the exhaust opening (200).

## Description

### TECHNICAL FIELD

The present invention relates to a construction machine.

### BACKGROUND ART

A construction machine described in Patent Literature 1 includes a lower traveling body and an upper turning body. The upper turning body has a cloth cover such that the cloth cover protrudes outward of a radiator grill provided on a hood. The cloth cover forms an air discharge duct that guides exhaust air upward.

### PRIOR ART DOCUMENT

### PATENT DOCUMENT

Patent Document 1: JP-A-2003-213724

### SUMMARY OF INVENTION

### TECHNICAL PROBLEM

In the construction machine described in Patent Literature 1, an operator needs to pay attention during turning such that the cloth cover protruding from the hood does not contact an external obstacle. Thus, workability is sacrificed.

An object of the present invention is to provide a construction machine of which the workability is improved.

### SOLUTION TO PROBLEM

The construction machine of the present invention includes an engine, a cooling fan, a hood, a heat exchanger, and a partition plate. The cooling fan is assembled to the engine. The hood has an exhaust opening. The heat exchanger is arranged between the cooling fan and the exhaust opening. The partition plate forms an air discharge passage between the heat exchanger and the exhaust opening. The partition plate is inclined upward in a direction from the heat exchanger toward the exhaust opening.

### ADVANTAGEOUS EFFECTS OF INVENTION

According to the present invention, the construction machine of which the workability is improved is provided.

### BRIEF DESCRIPTION OF DRAWINGS

Fig. 1 is a side view showing an example of a construction machine according to an embodiment.
Fig. 2 is a view showing an example of the appearance of a right rear portion of an upper turning body.
Fig. 3 is a view showing an example of a detailed configuration of a grill covering part of an exhaust opening.
Fig. 4 is a plan view schematically showing an example of component arrangement in an engine room.
Fig. 5 is a view showing an example of arrangement of partition plates forming an air discharge passage.
Fig. 6 is a perspective view of the partition plates from another direction.
Fig. 7 is a perspective view of the partition plates from yet another direction.

### DESCRIPTION OF EMBODIMENTS

An embodiment of the present invention will be described with reference to the drawings. Note that in the drawings, the same reference numerals are used to represent the same or equivalent elements and description thereof will not be repeated.

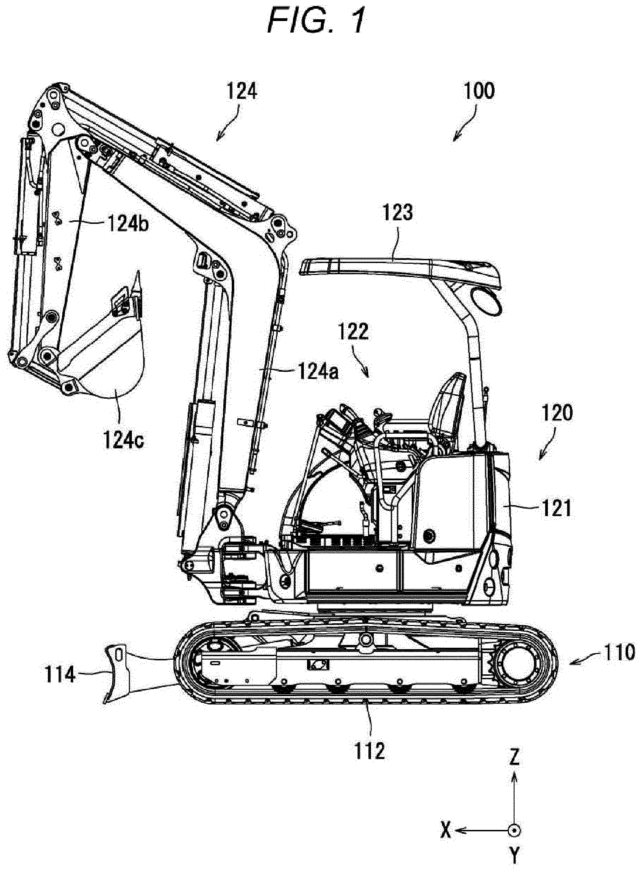

A construction machine 100 according to the embodiment will be described with reference to Fig. 1. Fig. 1 is a side view showing an example of the construction machine 100. The construction machine 100 is, for example, an excavator. For the sake of convenience, in Fig. 1, a direction from the right to the left is a positive direction of an X-axis, a direction from the rear to the front is a positive direction of a Y-axis, and a direction from the bottom to the top is a positive direction of a Z-axis.

As shown in Fig. 1, the construction machine 100 includes a lower traveling body 110 and an upper turning body 120. The upper turning body 120 is turnable relative to the lower traveling body 110.

The lower traveling body 110 includes a traveling mechanism 112 and a blade 114. The traveling mechanism 112 is of a crawler type. The blade 114 is used for a soil discharging work and a ground leveling work.

The upper turning body 120 includes a hood 121, a steering unit 122, a canopy 123, and a work machine 124.

The hood 121, the steering unit 122, and the canopy 123 are arranged on an upper portion of the upper turning body 120. The hood 121 forms a substantially semi-cylindrical exterior of the upper turning body 120. The steering unit 122 enables an operator to steer the construction machine 100. The canopy 123 is provided as a canopy for the operator.

The work machine 124 is arranged on the front side of the upper turning body 120. The work machine 124 includes a boom 124a, an arm 124b, and a bucket 124c. The boom 124a, the arm 124b, and the bucket 124c are driven by a hydraulic device in a well-known manner.

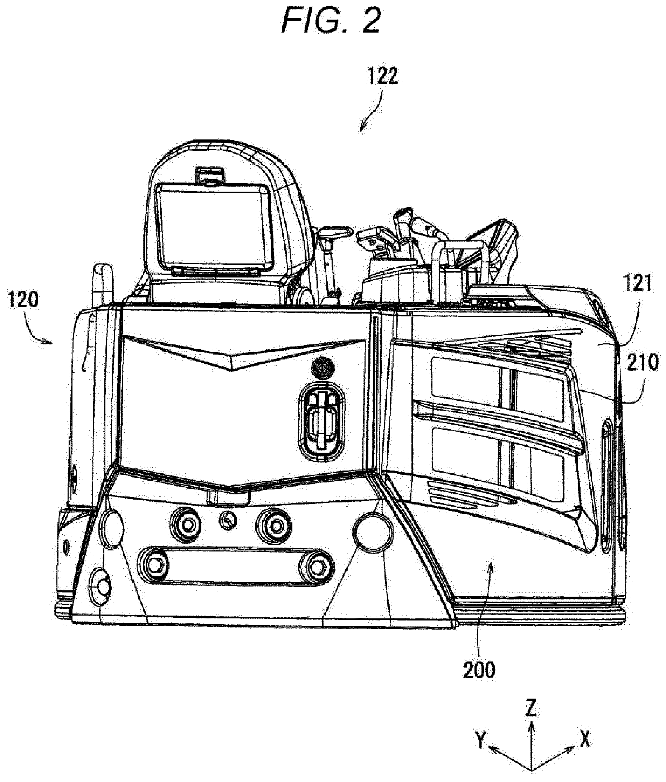

Next, the appearance of a right rear portion of the upper turning body 120 will be described with reference to Figs. 1 and 2. Fig. 2 is a view showing an example of the appearance of the right rear portion of the upper turning body 120.

As shown in Fig. 2, the hood 121 has an exhaust opening 200. Part of the exhaust opening 200 is covered with a grill 210 having a quadrangular shape.

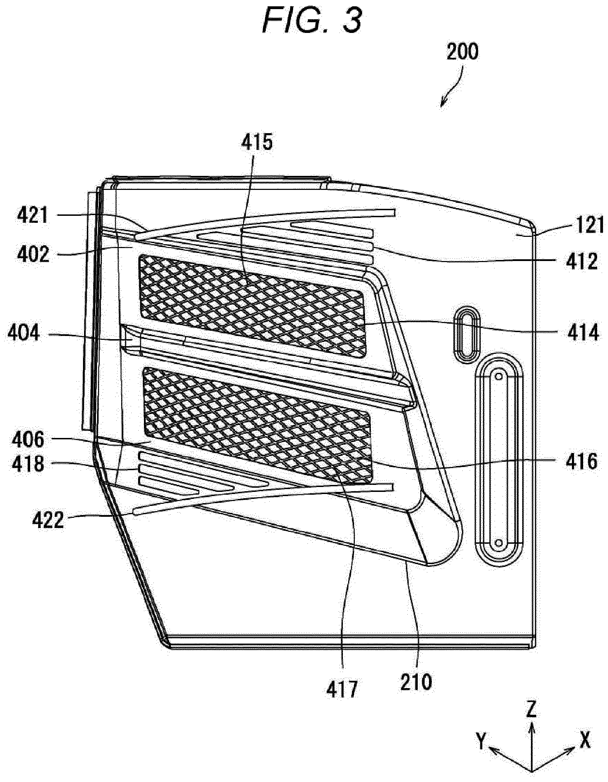

Next, a detailed configuration of the grill 210 will be described with reference to Figs. 1 to 3. Fig. 3 is a view showing an example of the detailed configuration of the grill 210.

As shown in Fig. 3, the grill 210 has an upper edge, a lower edge, a right edge, and a left edge. The upper and lower edges are formed higher on the machine body rear side than on the machine body front side of the construction machine 100.

The grill 210 has an upper horizontal crosspiece 402, a center horizontal crosspiece 404, and a lower horizontal crosspiece 406. The upper horizontal crosspiece 402 defines the upper edge of a first section 414 having a rectangular opening. The center horizontal crosspiece 404 divides the first section 414 and a second section 416 having a rectangular opening. The lower horizontal crosspiece 406 divides the second section 416 and a third section 418 having a plurality of slits.

The second section 416 is a center section having an opening area equal to that of the first section 414. The third section 418 is an end section having an opening area smaller than the opening area of the second section 416. A remaining portion of the grill 210 other than the center horizontal crosspiece 404 is recessed inward of a machine body of the construction machine 100 with respect to the hood 121.

The grill 210 further has a net 415 covering the opening of the first section 414 and a net 417 covering the opening of the second section 416.

The hood 121 includes an additional section 412 having a plurality of slits. The additional section 412 indicates a portion of the exhaust opening 200 not covered with the grill 210. Further, a first additional horizontal crosspiece 421 protrudes along an upper edge portion of the additional section 412. The first additional horizontal crosspiece 421 is formed higher on the machine body front side than on the machine body rear side of the construction machine 100. At a lower end portion of the grill 210, a second additional horizontal crosspiece 422 protrudes in parallel with the first additional horizontal crosspiece 421.

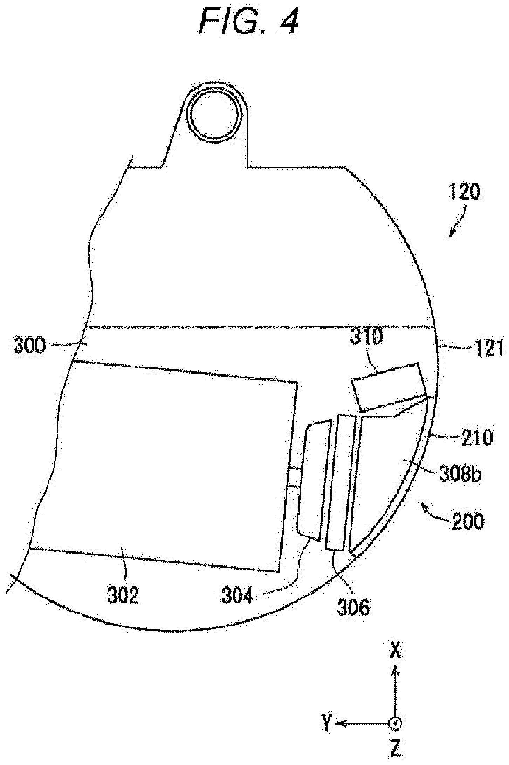

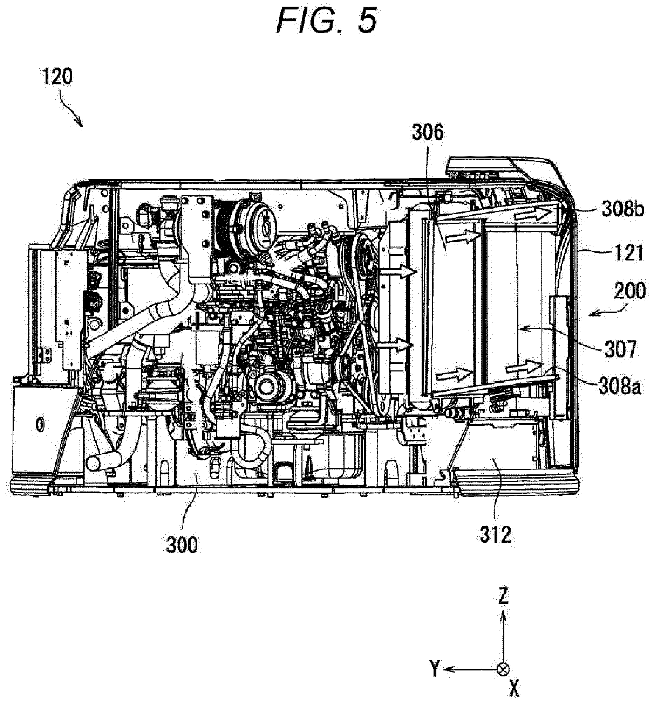

Next, component arrangement in an engine room 300 will be described with reference to Figs. 1 to 5. Fig. 4 is a plan view schematically showing an example of the component arrangement in the engine room 300. Fig. 5 is a view showing a state in which part of the hood 121 is removed from the configuration of Fig. 2, and shows an example of arrangement of a lower partition plate 308a and an upper partition plate 308b.

As shown in Figs. 4 and 5, the engine room 300 is defined below a driver's seat by the hood 121. In the engine room 300, an engine 302, a cooling fan 304, a radiator 306, the lower partition plate 308a, the upper partition plate 308b, a hydraulic oil tank 310, and a battery 312 are arranged. The radiator 306 is equivalent to an example of a "heat exchanger."

The engine 302 is a power source for the construction machine 100, and, for example, is a diesel engine. The engine 302 has an electric device. The cooling fan 304 and a not-shown hydraulic oil pump are assembled to an output shaft of the engine 302. The radiator 306 is arranged between the cooling fan 304 and the exhaust opening 200, and is supplied with coolant for the engine 302. Air sucked through a not-shown suction opening by the suction force of the cooling fan 304 passes through the engine 302, and exchanges heat with the radiator 306. The lower partition plate 308a and the upper partition plate 308b are plates having a substantially triangular shape. One side of each of the lower partition plate 308a and the upper partition plate 308b is curved so as to contact the inner surface of the hood 121. The hydraulic oil tank 310 is arranged adjacent to the lower partition plate 308a and the upper partition plate 308b on the machine body front side, and stores hydraulic oil discharged from the hydraulic oil pump.

As shown in Fig. 5, the battery 312 is arranged in a space below the lower partition plate 308a, and supplies power to the electric device of the engine 302. The lower partition plate 308a and the upper partition plate 308b form an air discharge passage 307 between the radiator 306 and the exhaust opening 200. Moreover, the lower partition plate 308a and the upper partition plate 308b are inclined upward in a direction from the radiator 306 toward the exhaust opening 200. Thus, the direction of air discharged from the hood 121 through the exhaust opening 200 is obliquely upward as indicated by arrows in Fig. 5.

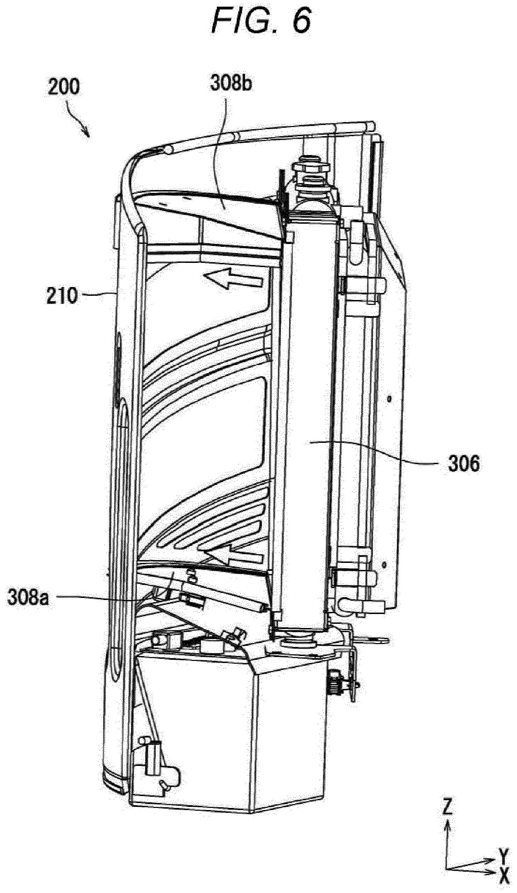

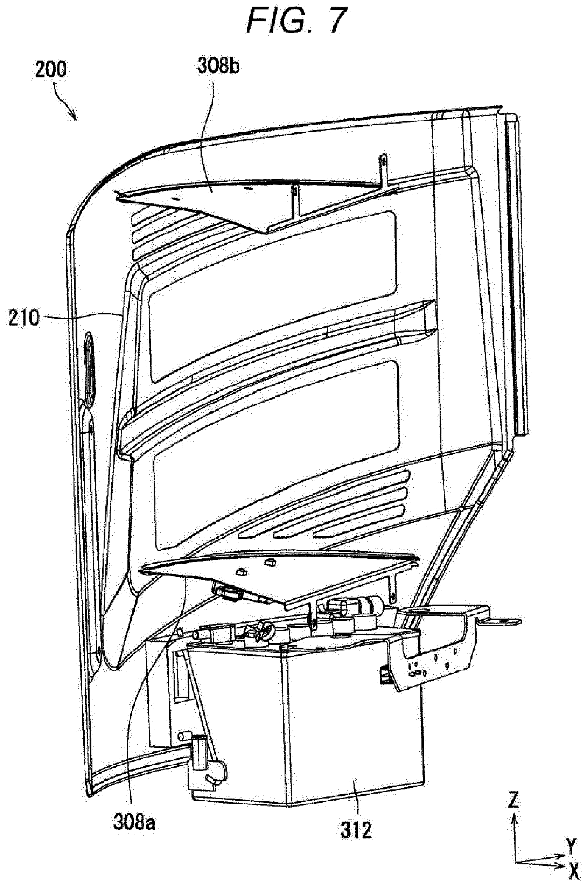

Fig. 6 is a perspective view of the lower partition plate 308a and the upper partition plate 308b from another direction. Fig. 7 is a perspective view of the lower partition plate 308a and the upper partition plate 308b from yet another direction.

As shown in Figs. 6 and 7, the lower partition plate 308a and the upper partition plate 308b are arranged higher on the machine body rear side than on the machine body front side of the construction machine 100. Further, one edge portion of the third section 418 forming a boundary with the second section 416 shown in Fig. 3 is formed along an exhaust-opening-200-side end portion of the lower partition plate 308a. The lower partition plate 308a may have a drain hole at an inclined lower end portion in order to discharge rainwater having entered the air discharge passage 307.

According to the above-described embodiment, the flow of exhaust air is adjusted inside the hood 121, and therefore, the construction machine 100 of which the workability is improved is provided without contact with an external obstacle during turning.

The embodiment of the present invention has been described above with reference to the drawings. Note that the present invention is not limited to the above-described embodiment and can be implemented in various forms without departing from the gist of the invention. In addition, various aspects of the invention can be made by appropriately combining a plurality of components disclosed above in the embodiment. For example, some components may be omitted from all the components described in the embodiment. For the sake of easy understanding, the drawings schematically show each component, and, e.g., the number of each component shown may be different from an actual number for the sake of convenience in preparation of the drawings. In addition, each component described above in the embodiment is an example and is not particularly limited, and various changes can be made without substantially departing from the advantageous effects of the present invention.

In the embodiment, the heat exchanger arranged between the cooling fan 304 and the exhaust opening 200 is the radiator 306, but the present invention is not limited thereto. The heat exchanger may be an oil cooler for cooling hydraulic oil.

In the embodiment, the lower partition plate 308a and the upper partition plate 308b are arranged higher on the machine body rear side than on the machine body front side of the construction machine 100, but the present invention is not limited thereto. According to the position of the engine 302, the lower partition plate 308a and the upper partition plate 308b may be arranged higher on the machine body front side than on the machine body rear side of the construction machine 100. In this case, at least one of the upper or lower edge of the grill 210 may be formed higher on the machine body front side than on the machine body rear side of the construction machine 100.

### INDUSTRIAL APPLICABILITY

The present invention is applicable to the field of construction machines.

### LIST OF REFERENCE SIGNS

- 100: Construction Machine
- 121: Hood
- 200: Exhaust Opening
- 210: Grill
- 302: Engine
- 304: Cooling Fan
- 306: Radiator (Heat Exchanger)
- 307: Air Discharge Passage
- 308a: Lower Partition Plate
- 308b: Upper Partition Plate
- 402: Upper Horizontal Crosspiece
- 404: Center Horizontal Crosspiece
- 406: Lower Horizontal Crosspiece
- 412: Additional Section
- 414: First Section
- 415: Net
- 416: Second Section
- 417: Net
- 418: Third Section
- 421: First Additional Horizontal Crosspiece
- 422: Second Additional Horizontal Crosspiece

## Claims

1. A construction machine comprising:
an engine;
a cooling fan that is assembled to the engine;
a hood that has an exhaust opening;
a heat exchanger that is arranged between the cooling fan and the exhaust opening; and
a partition plate that forms an air discharge passage between the heat exchanger and the exhaust opening,
wherein the partition plate is inclined upward in a direction from the heat exchanger toward the exhaust opening.

2. The construction machine according to claim 1, wherein the partition plate is arranged higher on a machine body rear side than on a machine body front side of the construction machine.

3. The construction machine according to claim 2, wherein the partition plate has a drain hole at an inclined lower end portion.

4. The construction machine according to claim 2 or 3, further comprising:
a grill that covers at least part of the exhaust opening and has a quadrangular shape,
wherein at least one of an upper edge or a lower edge of the grill is formed higher on the machine body rear side than on the machine body front side of the construction machine.

5. The construction machine according to claim 4, wherein the grill has at least one horizontal crosspiece that divides the quadrangular shape into a plurality of sections.

6. The construction machine according to claim 5, wherein a remaining portion of the grill other than the horizontal crosspiece is recessed inward of a machine body of the construction machine with respect to the hood.

7. The construction machine according to claim 5 or 6, wherein the grill has, at a portion contacting at least one of the upper edge or the lower edge, an end section that has an opening area smaller than an opening area of a center section.

8. The construction machine according to claim 7, wherein one edge portion of the end section is formed along an exhaust-opening-side end portion of the partition plate.

9. The construction machine according to claim 7 or 8, wherein the grill further has a net that covers the center section.

10. The construction machine according to claim 4, wherein the hood has an additional section that indicates a portion of the exhaust opening not covered with the grill.

11. The construction machine according to claim 10, further comprising:
an additional horizontal crosspiece that protrudes along an edge portion of the additional section.

12. The construction machine according to claim 11, wherein the additional horizontal crosspiece is arranged higher on the machine body front side than on the machine body rear side of the construction machine.
